# EUROPÄISCHE PATENTSCHRIFT

(11) **EP 4 345 813 B1**
(45) Veröffentlichungstag und Bekanntmachung des Hinweises auf die Patenterteilung: **11.03.2026**
(21) Anmeldenummer: 24152316.6
(22) Anmeldetag: 12.06.2018
(51) Int. Cl.: G06F 3/01, G06F 3/041, G06F 3/043, G10K 11/34, H04R 1/40, G03H 1/00

(54) **ANZEIGEVORRICHTUNG**
DISPLAY DEVICE
DISPOSITIF D'AFFICHAGE

(30) Priorität: 17.07.2017 DE 102017116012
(43) Veröffentlichungstag der Anmeldung: 03.04.2024
(62) Teilanmeldung aus: 18730775.6
(73) Patentinhaber: Fraunhofer-Gesellschaft zur Förderung der angewandten Forschung e.V., 80686 München (DE)
(72) Erfinder: Tretbar, Steffen, 66280 Sulzbach (DE); Schmitt, Daniel, 66280 Sulzbach (DE)
(74) Vertreter: 2SPL Patentanwälte PartG mbB

(56) Entgegenhaltungen:
- US-A1- 2012 082 332
- US-A1- 2015 169 136
- US-A1- 2016 147 305
- US-A1- 2016 246 374
- US-A1- 2016 282 808

## Beschreibung

### Technisches Gebiet

Ausführungsbeispiele befassen sich mit Anzeigevorrichtungen mit haptischer Rückmeldung. Insbesondere befassen sich Ausführungsbeispiele mit Anzeigevorrichtungen und einem Pixel für eine Anzeigevorrichtung.

### Hintergrund

Dokument US 2016/282808 A1 betrifft ein Verfahren und System für ein skalierbares multisensorisches Benutzererlebnis. Ein 3-D-Bildschirm befindet sich hinter einer Spaltpaneel mit Schlitzen und Ultraschallwandlern. Licht vom 3-D-Bildschirm passiert die Schlitze in der Spaltpaneel, um ein 3-D-Bild zu erzeugen. Die Ultraschallwandler auf der Vorderseite der Spaltpaneel, also auf der gegenüberliegenden Seite, wo sich der 3-D-Bildschirm befindet, erzeugen ein gerichtetes akustisches Feld und/oder ein geformtes taktiles Feld.

Dokument US 2016/147305 A1 betrifft ein Display-Gerät mit einem unteren Substrat, einem oberen Substrat, das dem unteren Substrat zugewandt ist, einer elektrooptisch aktiven Schicht, die zwischen dem unteren Substrat und dem oberen Substrat angeordnet ist, und einer Vielzahl von Membranen, die auf einer Oberfläche des unteren Substrats oder des oberen Substrats angeordnet sind. Die Vielzahl von Membranen sind so konfiguriert, dass sie Licht einer spezifischen Wellenlänge absorbieren und vibrieren, um Ultraschallwellen zu erzeugen.

Dokument US 2015/169136 A1 betrifft eine Anzeigeeinrichtung, die eine Anordnung von mikromechanischen Ultraschallwandlern umfasst, die entweder unterhalb, seitlich, auf oder oberhalb der Rückwand einer visuellen Anzeige angeordnet sind. Die Wandler können in verschiedenen Frequenzbereichen betrieben werden, um Gestenerkennung, Fingerabdrucksensorik oder Stifterkennung zu ermöglichen.

Dokument US 2016/246374 A1 betrifft ein haptisches System, das taktiles Feedback oberhalb von interaktiven Oberflächen bietet. Ultraschallwandler werden verwendet, um ein akustisches Feld zu erzeugen, das taktile Empfindungen in der Luft hervorruft, um eine berührungslose Rückmeldung zu ermöglichen. Die Frequenz der Vibrationen wird dynamisch angepasst, um die optimale haptische Wahrnehmung zu gewährleisten, basierend auf den spezifischen mechanorezeptiven Eigenschaften der menschlichen Haut.

Dokument US 2012/082332 A1 betrifft eine Schall durchlässige Anzeigevorrichtung zur Ausgabe von Ton mit einem objektbasierten Positions-Koordinateneffekt. Die Vorrichtung umfasst eine Vielzahl von Pixeln, eine Vielzahl von Löchern, die in einem OLED Displaypanel in einer bestimmten Dichte verteilt sind, um es dem Ton von einem Lautsprecher auf der Rückseite des OLED-Displaypanels zu ermöglichen zu durchdringen, eine Treiberschaltung zur Ansteuerung des OLED-Displaypanels, eine Schutzschicht, die an der Rückseite des OLED-Displaypanels befestigt ist oder in der Nähe desselben angeordnet ist und aus Löchern besteht, die mit den Löchern des Panels übereinstimmen, und eine Vielzahl von Matrixlautsprechern umfasst, die auf der Rückseite des OLED-Displaypanels angeordnet sind.

Frei konfigurierbare graphische Benutzeroberflächen zur Fingerbedienung (auch als "Touchscreen" bezeichnet) ersetzen auf immer breiterer Basis konventionelle Bedienelemente in Geräten und Instrumenten des täglichen Lebens (z.B. Mobiltelefon, Kaffeemaschine oder PKW). Dort werden visuell z.B. klassische Schieberegler und Drehknöpfe für eine intuitive Bedienung nachgebildet. Jedoch fehlt solchen rein graphischen Benutzeroberflächen Haptik und insbesondere eine taktile Rückmeldung (taktiles Feedback). Wurde beispielsweise ein virtueller Knopf gedrückt, ein virtueller Schieberegler bis zum oberen Anschlag geschoben oder ein virtueller Drehregler um eine halbe Umdrehung gedreht, so wird oftmals nur ein mitunter als störend empfundenes akustisches Signals oder ein kurze Vibration zur Quittierung der Ausführung ausgegeben.

Zur besseren Einbindung des menschlichen Tastsinns in Bedienkonzepte sollten sich ändernde Positionen und Formen von graphisch dargestellten Objekten (z.B. Knopf oder Schieberegler) flexibel verfolgen lassen. Dies kann z.B. über mechanische Schwingungen oder Wellen an der Displayoberfläche bzw. eine Abstrahlung von Ultraschallwellen in die Luft erfolgen. Amplitudenschwankungen in der Auslenkung oder im Schalldruck können mit dem menschlichen Tastsinn erfasst werden. Beispielsweise kann so ein modulierbarer Widerstand für einen menschlichen Finger erzeugt werden, der die Stellung eines graphisch dargestellten (d.h. virtuellen) Schalters repräsentiert.

Diese Rückmeldung über nicht-optische Kanäle kann insbesondere dann wichtig sein, wenn die Interaktion mit der graphischen Benutzeroberfläche vor dem Display oder ohne Kontakt mit diesem stattfindet. Dies ist beispielsweise bei holographischen, dreidimensionalen Displays der Fall.

Es besteht somit ein Bedürfnis, eine Möglichkeit zur Bereitstellung von taktilem Feedback anzugeben.

### Zusammenfassung

Dieses Bedürfnis wird durch eine Anzeigevorrichtung gemäß dem unabhängigen Anspruch befriedigt. Weitere Ausführungsbeispiele sind in den abhängigen Ansprüchen angegeben.

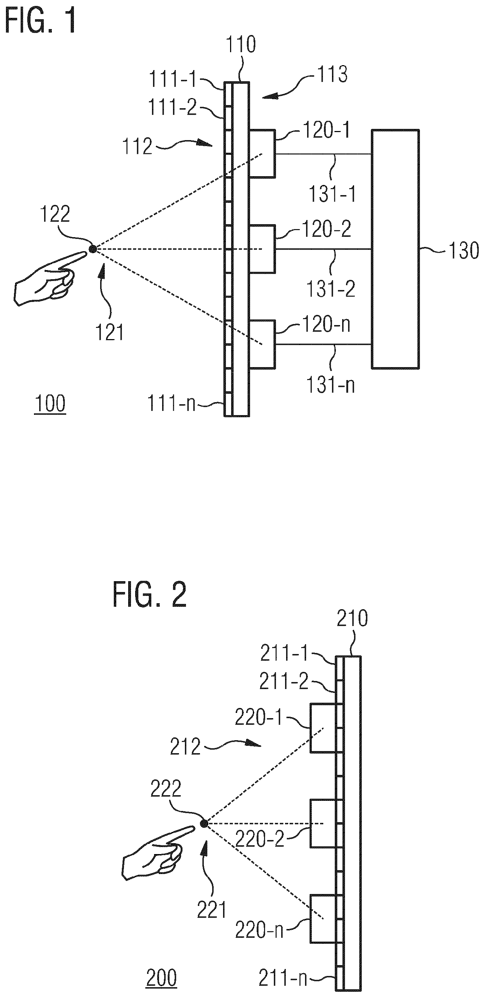

Es sei darauf hingewiesen, dass die beanspruchte Erfindung nachfolgend mit Bezug auf das in Fig. 2 gezeigte Ausführungsbeispiel einer Anzeigevorrichtung beschrieben wird. Dementsprechend ist jeder Bezug in der nachfolgenden Beschreibung auf eine Anzeigevorrichtung gemäß einem der in Fig. 1 und Fig. 3 bis 6 gezeigten Ausführungsbeispiele einer Anzeigevorrichtung als ein Beispiel zu verstehen, das lediglich dem besseren Verständnis der beanspruchten Erfindung dient, ohne jedoch Teil der beanspruchten Erfindung zu sein.

### Figurenkurzbeschreibung

Ausführungsbeispiele werden nachfolgend bezugnehmend auf die beiliegenden Figuren näher erläutert. Es zeigen:
Figs. 1 bis 3 zeigen Ausführungsbeispiele einer Anzeigevorrichtung;
Fig. 4 zeigt ein Ausführungsbeispiel eines Pixels für eine Anzeigevorrichtung;
Fig. 5 zeigt ein Ausführungsbeispiel einer Anzeigevorrichtung umfassend das in Fig. 4 gezeigte Pixel; und
Fig. 6 zeigt ein weiteres Ausführungsbeispiel einer Anzeigevorrichtung.

### Beschreibung

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass die Erfindung lediglich durch den Schutzumfang der beigefügten Patentansprüche, und nicht durch die Ausführungsbeispiele in der jeweils offenbarten Form, beschränkt ist.

Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können.

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen " einer", " eine", "eines" und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", aufweist" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, solange dies hierin nicht ausdrücklich anders definiert ist.

Fig. 1 zeigt eine nicht beanspruchte Anzeigevorrichtung 100. Die Anzeigevorrichtung 100 umfasst eine optische Struktur 110 mit einer Mehrzahl an Pixeln 111-1, 11-2, ..., 111-n, die eingerichtet sind, auf einer Vorderseite 112 der optischen Struktur 110 ein optisches Bild zu erzeugen. Ferner umfasst die Anzeigevorrichtung 100 eine Mehrzahl an Schallwandlern 120-1, 120-2, ..., 120-n, die eingerichtet sind, basierend auf einer Mehrzahl an Ansteuerungssignalen 131-1, 131-2, ..., 131-n in einem Raum vor der Vorderseite 112 der optischen Struktur 110 ein Schallfeld 121 zur Reizung des Tastsinns einer menschlichen Person zu erzeugen. Die Mehrzahl an Schallwandlern 120-1, 120-2, ..., 120-n sind auf einer Rückseite 113 der optischen Struktur 110 angeordnet. Die Anzeigevorrichtung 100 umfasst zudem eine Steuerschaltung 130, die eingerichtet ist, zumindest eines der Mehrzahl an Ansteuerungssignalen 131-1, 131-2, ..., 131-n basierend auf zumindest einer akustischen Eigenschaft der optischen Struktur 110 zu erzeugen.

Die Anzeigevorrichtung 100 kann neben der Ausgabe eines optischen Bildes über die optische Struktur 110 auch das Bereitstellen einer taktilen Rückmeldung über das von der Mehrzahl an Schallwandlern 120-1, 120-2, ..., 120-n erzeugte Schallfeld 121 ermöglichen. Aufgrund der Ansteuerung eines oder mehrerer der Mehrzahl an Schallwandlern 120-1, 120-2, ..., 120-n unter Berücksichtigung der akustischen Eigenschaft(en) der optischen Struktur 110 können akustische Verzerrungen bzw. Modifikationen der von der Mehrzahl an Schallwandlern 120-1, 120-2, ..., 120-n ausgesendeten Schallwellen durch die optische Struktur 110 kompensiert bzw. zumindest abgemildert werden. Mit anderen Worten: Eines oder mehrere der Mehrzahl an Ansteuerungssignalen 131-1, 131-2, ..., 131-n werden basierend auf der akustischen Eigenschaft(en) der optischen Struktur 110 vorverzerrt, um so eine Kompensation bzw. Abmilderung der von der optischen Struktur 110 verursachten akustischen Verzerrung der der von der Mehrzahl an Schallwandlern 120-1, 120-2, ..., 120-n ausgesendeten Schallwellen zu ermöglichen. Derart können die Mehrzahl an Schallwandlern 120-1, 120-2, ..., 120-n auf der Rückseite der optischen Struktur 110 angeordnet werden, ohne dass das von der Mehrzahl an Schallwandlern 120-1, 120-2, ..., 120-n im Raum vor der Vorderseite 112 der optischen Struktur 110 erzeugte ein Schallfeld 121 durch die optische Struktur 110 negativ beeinflusst wird.

Die optische Struktur 110 kann dabei jede Art von pixelierter Struktur sein, die aktiv ein optisches Bild basierend auf einem oder mehreren Steuersignalen erzeugen kann. Beispielsweise kann es sich bei der optischen Struktur um eine Leuchtdiodenanzeige (engl. Light-Emitting Diode, LED display). Jedes der Pixel kann dabei eine oder mehrere anorganische und/oder organische Leuchtdioden aufweisen. Beispielsweise kann jedes Pixel zumindest jeweils eine Leuchtdiode aufweisen, um basierend auf einem Steuersignal jeweils rotes, grünes oder blaues Licht auszustrahlen. Dazu kann die optische Struktur 110 weitere Elemente wie etwa eine oder mehrere interne Steuerungsschaltungen für die Ansteuerung der einzelnen Pixel umfassen. Die Pixel als auch die weiteren Elemente der optischen Struktur 110 können z.B. auf einem Trägersubstrat der optischen Struktur 110 angeordnet sein. Die Anzahl an Pixeln kann dabei je nach Größe der optischen Struktur 110 bzw. je nach gewünschter Auflösung der optischen Struktur 110 variieren. Beispielsweise kann die optische Struktur 110 eine Auflösung von 1280 x 720 Pixeln, 1920 x 1080 Pixeln, 4096 x 2160 Pixeln oder mehr bereitstellen.

Die Vorderseite 112 der optischen Struktur 110 ist die einem Benutzer der Anzeigevorrichtung 100 zugewandte Seite der optischen Struktur 110. Entsprechend ist die Rückseite 113 der optischen Struktur 110 die der Vorderseite 112 gegenüberliegende Seite der optischen Struktur 110.

Die Mehrzahl an Schallwandlern 120-1, 120-2, ..., 120-n sind Vorrichtungen, die jeweils ein (elektrisches) Ansteuerungssignal der Mehrzahl an Ansteuerungssignalen 131-1, 131-2, ..., 131-n in eine Schallwelle bzw. eine mechanische Welle wandeln. Beispielsweise kann so ein Schallwechseldruck an einem Punkt im Raum vor der Vorderseite 112 der optischen Struktur 112 erzeugt werden. Dazu kann ein Schallwandler beispielsweise ausgebildet sein, das Ansteuerungssignal mittels eines elektromagnetischen, eines elektrodynamischen, eines elektrostatischen, eines piezoelektrischen oder eines piezoresistiven Effekts in eine Schallwelle zu wandeln und diese auszustrahlen.

Bei den Schallwellen kann es sich um jegliche Schallwellen handeln, die außerhalb des menschlichen Hörbereichs liegen. Beispielsweise kann daher zumindest einer der Mehrzahl an Schallwandlern 120-1, 120-2, ..., 120-n eingerichtet sein, Schallwellen mit einer Frequenz von zumindest 25 kHz, 40 kHz, 60 kHz, 100 kHz oder mehr auszustrahlen. Die somit von dem Schallwandler erzeugten Ultraschallwellen eignen sich für die Erzeugung des Schallfelds 121 zur Reizung des Tastsinns einer menschlichen Person, da sie örtlich fein moduliert werden können und außerhalb des menschlichen Hörbereichs liegen. Wie in Fig. 1 angedeutet, kann eine menschliche Person z.B. durch das Einbringen eines oder mehrerer Finger in das Schallfeld 121 die taktile Rückmeldung durch Reizung ihres Tastsinns spüren. Das Schallfeld 121 ist dabei der Raum vor der Vorderseite 112, in dem sich die Schallwellen der Mehrzahl an Schallwandlern 120-1, 120-2, ..., 120-n ausbreiten und (konstruktiv wie destruktiv) überlagern.

Um die Anzeigevorrichtung 100 auch in kompakten Geräten (z.B. Mobiltelefon, Laptop-Computer oder Tablet-Computer) nutzen zu können, sollten die einzelnen Komponenten der Anzeigevorrichtung 100 möglichst wenig Bauraum beanspruchen. Entsprechend kann so z.B. zumindest einer der Mehrzahl an Schallwandlern 120-1, 120-2, ..., 120-n als MEMS (MicroElectroMechanical System)-Schallwandler ausgebildet sein. Beispielsweise kann der MEMS-Schallwandler aus einem Halbleitermaterial (z.B. Silizium) gebildet sein.

Die Mehrzahl an Schallwandlern 120-1, 120-2, ..., 120-n können über die Rückseite 113 der optischen Vorrichtung 110 verteilt sein. Beispielsweise können die Mehrzahl an Schallwandlern 120-1, 120-2, ..., 120-n in Form einer zwei-dimensionalen Anordnung auf der Rückseite 113 der optischen Vorrichtung 110 angebracht sein. In einigen Ausführungsbeispielen kann die Mehrzahl an Schallwandlern 120-1, 120-2, ..., 120-n z.B. in Form einer Matrix auf der Rückseite 113 der optischen Struktur 110 angeordnet sein. Mit anderen Worten: Die Mehrzahl an Schallwandlern 120-1, 120-2, ..., 120-n können in Zeilen und Spalten angeordnet sein.

Die Steuerschaltung 130 kann einen Prozessor, einen Computerprozessor (engl. CPU = Central Processing Unit), einen Grafikprozessor (engl. GPU = Graphics Processing Unit), einen Computer, ein Computersystem, einen anwendungsspezifischen integrierten Schaltkreis (engl. ASIC = Application-Specific Integrated Circuit), einen integrierten Schaltkreis (engl. IC = Integrated Circuit), ein Ein-Chip-System (engl. SoC = System on a Chip), ein programmierbares Logikelement oder ein feldprogrammierbares Gatterarray mit einem Mikroprozessor (FPGA = Field Programmable Gate Array) aufweisen, auf dem Software für die Steuerung der Mehrzahl an Schallwandlern 120-1, 120-2, ..., 120-n gemäß den hierin beschriebenen Grundsätzen abläuft. Ferner kann die Steuerschaltung 130 einen oder mehrere Speicher aufweisen, in denen z.B. Software für die Steuerung der Mehrzahl an Schallwandlern 120-1, 120-2, ..., 120-n oder sonstige Daten gespeichert sein können. Wie bereits oben angedeutet, kann die Steuerschaltung eine Mehrzahl an Steuerungssignalen für die Mehrzahl Schallwandler 120-1, 120-2, ..., 120-n an Schallwandlern empfangen oder selbst erzeugen und diese anschließend modifizieren, um die Mehrzahl an Ansteuerungssignalen 131-1, 131-2, ..., 131-n zu erzeugen. Mit anderen Worten: Die Steuerschaltung 130 kann ausgebildet sein, eine Mehrzahl an Steuerungssignalen für die Mehrzahl Schallwandler 120-1, 120-2, ..., 120-n basierend auf der zumindest einen akustischen Eigenschaft der optischen Struktur 110 vorzuverzerren, um die Mehrzahl an Ansteuerungssignalen 131-1, 131-2, ..., 131-n zu erzeugen. Die Vorverzerrung kann sowohl digital als auch analog erfolgen.

Die zumindest eine akustische Eigenschaft der optischen Struktur 110 ist eine Eigenschaft der optischen Struktur 110, die deren Wechselwirkung mit Schallwellen beschreibt. Beispielsweise kann die zumindest eine akustische Eigenschaft der optischen Struktur 110 die akustische Transparenz der optischen Struktur 110 sein. Die akustische Transparenz beschreibt dabei das Maß der Durchlässigkeit der optischen Struktur für Schallwellen. An einer Stelle mit hoher akustischer Transparenz kann eine Schallwelle die optische Struktur 110 ohne bzw. ohne wesentliche Verzerrungen durchdringen, wohingegen die optische Struktur 110 an einer Stelle mit niedriger akustischer Transparenz die Schallwelle stark verzerrt bzw. für diese undurchdringbar sein kann.

Bei dem auf der Vorderseite 112 der optischen Struktur 110 erzeugten optischen Bild kann es sich um ein Standbild als auch um ein einzelnes Bild einer Abfolge von Bildern (z.B. ein Video) handeln.

Das Schallfeld 121 kann einem Objekt in dem auf der Vorderseite 112 der optischen Struktur 110 erzeugten optischen Bild zugeordnet sein. Grundsätzlich kann es sich bei dem Objekt um jegliches in einem optischen Bild darstellbares Objekt handeln. Beispielsweise kann das Objekt ein in dem optischen Bild dargestellter Schalter, Knopf, Schieberegler oder Drehregler sein.

Entsprechend kann die Steuerschaltung 130 eingerichtet sein, die Mehrzahl an Ansteuerungssignalen 131-1, 131-2, ..., 131-n basierend auf einem Zustand des Objekts in dem optischen Bild zu erzeugen. Entsprechend kann das Schallfeld 121 an den Zustand des Objekts in dem optischen Bild angepasst werden. Bewegt sich das Objekt in dem optischen Bild beispielsweise in einer Ebene parallel zu der Vorderseite 112 des optischen Struktur 110, kann die Steuerschaltung 130 die Mehrzahl an Ansteuerungssignalen 131-1, 131-2, ..., 131-n derart erzeugen, dass das von der Mehrzahl an Schallwandlern 120-1, 120-2, ..., 120-n erzeugte Schallfeld 121 ebenso eine Bewegung in einer Ebene parallel zu der Vorderseite 112 des optischen Struktur 110 nachbildet. Beispielsweise kann eine Position eines Fokuspunkts 122 des Schallfelds 121 abhängig von einer Position des Objekts in dem optischen Bild durch entsprechende Ansteuerungssignalen 131-1, 131-2, ..., 131-n der Steuerschaltung 130 eingestellt werden. Der Fokuspunkt 122 ist dabei derjenige Punkt des Schallfelds 121, an dem sich zumindest ein Teil der von der Mehrzahl an Schallwandlern 120-1, 120-2, ..., 120-n ausgestrahlten Schallwellen überlagert, so dass der resultierende Schalldruck bzw. eine Variation desselben an diesem Punkt zur gezielten Reizung des Tastsinns einer menschlichen Person ausreicht. Einem einzelnen Objekt können dabei einer oder mehrere Fokuspunkte zugeordnet sein. Entsprechend können mehrere Fokuspunkte auch mehreren Objekten in dem optischen Bild zugeordnet sein.

Ist das Objekt beispielsweise ein in dem optischen Bild angezeigter virtueller Knopf, der durch eine Benutzereingabe eines Benutzers gedrückt wurde, kann dies dem Benutzer taktil durch z.B. eine Veränderung eines vertikalen Abstands des Fokuspunkts 122 des Schallfelds 121 zu der Vorderseite 112 der optischen Struktur 110 angezeigt werden. Abhängig von dem vertikalen Abstand des Fokuspunkts 122 des Schallfelds 121 zu der Vorderseite 112 der optischen Struktur 110 kann der Benutzer somit erkennen, ob der virtuelle Knopf gedrückt ist oder nicht.

Entsprechend kann bei einem ein in dem optischen Bild angezeigten virtueller Drehregler, z.B. der Fokuspunkt 122 des Schallfelds 121 der Drehbewegung folgen (d.h. der Fokuspunkt macht ebenso eine Drehbewegung). Ist der virtuelle Drehregler an einem Anschlag angelangt, so kann dies einem Benutzer durch ein Verweilen des Fokuspunkts 122 des Schallfelds 121 an einer Position, die dem Anschlag des Drehreglers zugeordnet ist, taktil angezeigt werden. Zusätzlich kann z.B. ein Schalldruck oder eine Schalldruckvariation bei Erreichen des Anschlags erhöht werden, um ein Erreichen des Anschlags anzuzeigen.

Der Fokuspunkt 122 des Schallfelds 121 kann dabei sowohl nahe an der Vorderseite 112 des optischen Struktur 110 ausgebildet werden, als auch in einiger Entfernung davon. Beispielsweise kann die Steuerschaltung 130 eingerichtet sein, die Mehrzahl an Ansteuerungssignalen 131-1, 131-2, ..., 131-n derart zu erzeugen, dass der Fokuspunkt 122 des Schallfelds 121 einen vertikalen Abstand von weniger als 2 cm, 1cm, 5mm oder weniger zu der Vorderseite 112 der optischen Struktur 110 aufweist. Alternativ kann die Steuerschaltung 130 eingerichtet sein, die Mehrzahl an Ansteuerungssignalen 131-1, 131-2, ..., 131-n derart zu erzeugen, dass der Fokuspunkt 122 des Schallfelds 121 einen vertikalen Abstand von mindestens 1 cm, 2 cm, 5 cm, 10 cm oder mehr zu der Vorderseite 112 der optischen Struktur 110 aufweist.

Die Steuerschaltung 130 kann eines oder mehrere der Mehrzahl an Ansteuerungssignalen 131-1, 131-2, ..., 131-n zudem auch basierend auf zumindest einer akustischen Eigenschaft eines auf der Vorderseite 112 der optischen Struktur 110 angeordneten Substrats (nicht gezeigt) erzeugen. Derart kann auch die akustische Verzerrung der durch die Mehrzahl Schallwandler 120-1, 120-2, ..., 120-n ausgestrahlten Schallwellen durch zwischen der optischen Struktur 110 und dem Benutzer befindlichen Substraten (z.B. Schutzschicht aus Glas etc.) kompensiert werden.

Weiterhin können einer oder mehrere der Mehrzahl an Schallwandler 120-1, 120-2, ..., 120-n auch verwendet werden, um akustische Informationen zu empfangen. Beispielsweise können so von einem Benutzer reflektierte Schallwellen detektiert werden, um eine Geste eines Benutzers zu erkennen. Zumindest einer der Mehrzahl an Schallwandler 120-1, 120-2, ..., 120-n kann daher ferner ausgebildet sein, basierend auf empfangenen Schallwellen ein Ausgangssignal bereitzustellen. Dieses Ausgangssignal kann beispielsweise von der Steuerschaltung 130 oder einer sonstigen Prozessorschaltung verarbeitet werden. In einigen Ausführungsbeispielen kann beispielsweise über entsprechende Ansteuerungssequenzen zwischen der Erzeugung von Druckfeldern und dem Empfang von akustischen Informationen durch einen oder mehrere der Mehrzahl an Schallwandler 120-1, 120-2, ..., 120-n umgeschaltet werden.

Bei der in Fig. 1 gezeigten Anzeigevorrichtung 100 sind die Mehrzahl an Schallwandlern 120-1, 120-2, ..., 120-n auf der Rückseite der optischen Struktur 110 angeordnet. Fig. 2 zeigt hingegen eine Anzeigevorrichtung 200, bei der erfindungsgemäß eine Mehrzahl an Schallwandlern auf der Vorderseite, d.h. der einem Benutzer zugewandten Seite, einer optischen Struktur angeordnet sind.

Die Anzeigevorrichtung 200 umfasst eine optische Struktur 210 mit einer Mehrzahl an Pixeln 211-1, 211-2, ..., 211-n, die eingerichtet sind, auf einer Vorderseite 212 der optischen Struktur 210 ein optisches Bild zu erzeugen. Ferner umfasst die Anzeigevorrichtung eine Mehrzahl an Schallwandlern 220-1, 220-2, ..., 220-n, die eingerichtet sind, in einem Raum vor der Vorderseite 212 der optischen Struktur ein Schallfeld 221 zur Reizung des Tastsinns einer menschlichen Person zu erzeugen. Die Mehrzahl an Schallwandlern 220-1, 220-2, ..., 220-n sind auf der Vorderseite 212 der optischen Struktur 210 angeordnet und für Licht mit einer Wellenlänge im Bereich von 380 nm bis 750 nm optisch transparent.

Wie auch die Anzeigevorrichtung 100 ermöglicht die Anzeigevorrichtung 200 neben der Ausgabe eines optischen Bildes über die optische Struktur 210 auch das Bereitstellen einer taktilen Rückmeldung über das von der Mehrzahl an Schallwandlern 220-1, 220-2, ..., 220-n erzeugte Schallfeld 221.

Die optische Transparenz der Mehrzahl an Schallwandlern 220-1, 220-2, ..., 220-n für Licht mit Wellenlängen im sichtbaren Bereich ermöglicht die Anordnung der Mehrzahl an Schallwandlern 220-1, 220-2, ..., 220-n auf der Vorderseite 212 der optischen Struktur 210. Eine Verzerrung der von der Mehrzahl an Schallwandlern 220-1, 220-2, ..., 220-n ausgestrahlten Schallwellen durch die optische Struktur 210 kann somit vermieden werden. Entsprechend müssen Schallverzerrungen durch die optische Struktur 210 bei der Ansteuerung der Mehrzahl an Schallwandlern 220-1, 220-2, ..., 220-n nicht berücksichtigt werden.

Die optische Struktur 210 kann im Wesentlichen identisch zur in Zusammenhang mit Fig. 1 diskutierten optischen Struktur 110 aufgebaut sein.

Die Mehrzahl an Schallwandlern 220-1, 220-2, ..., 220-n sind wie auch die obige Mehrzahl an Schallwandlern 120-1, 120-2, ..., 120-n als MEMS-Schallwandler ausgebildet.

Ebenso können die Mehrzahl an Schallwandlern 220-1, 220-2, ..., 220-n eingerichtet sein, Schallwellen mit einer Frequenz von zumindest 25 kHz, 40 kHz, 60 kHz, 100 kHz oder mehr auszustrahlen.

Ein Schallwandler der Mehrzahl an Schallwandlern 220-1, 220-2, ..., 220-n ist optisch transparent für Licht einer bestimmten Wellenlänge, wenn dieses den Schallwandler im Wesentlichen ungehindert durchdringen kann. Beispielsweise kann ein Schallwandler als optisch transparent für Licht einer bestimmten Wellenlänge angesehen werden, wenn er zumindest 40 %, 50 %, 60 % oder 70 % des einfallenden Lichts dieser Wellenlänge transmittiert.

Um für Licht im Bereich von 380 nm bis 750 nm optisch transparent zu sein, kann ein Schallwandler der Mehrzahl an Schallwandlern 220-1, 220-2, ..., 220-n beispielsweise ein strukturiertes Glassubstrat (z.B. aus Borosilikatglas) mit einer oder mehreren Elektroden aus einem Indiumzinnoxid (engl. Indium Tin Oxide, ITO) aufweisen. Zudem kann der Schallwandler beispielsweise eine Membran aus Siliziumnitrid (engl. Silicon Nitride; SiN) oder ITO aufweisen. Es versteht sich jedoch von selbst, dass die vorgenannten Materialien lediglich beispielhaft sind und auch andere optisch transparente Materialien verwendet werden können.

Wie bereits zur Anzeigevorrichtung 100 ausgeführt, kann das Schallfeld 221 einem Objekt in dem auf der Vorderseite 212 der optischen Struktur 210 erzeugten optischen Bild zugeordnet sein. Entsprechend kann die Anzeigevorrichtung 200 eine Steuerschaltung (nicht gezeigt) aufweisen, die eingerichtet ist, eine Mehrzahl an Ansteuerungssignalen basierend auf einem Zustand des Objekts in dem optischen Bild zu erzeugen. Derart kann das Schallfeld 221 an den Zustand des Objekts in dem optischen Bild angepasst werden.

Der Fokuspunkt 222 des Schallfelds 221 kann dabei wiederum sowohl nahe an der Vorderseite 212 der optischen Struktur 210 ausgebildet werden, als auch in einiger Entfernung davon. Beispielsweise kann die Steuerschaltung der Anzeigevorrichtung 200 eingerichtet sein, die Mehrzahl an Ansteuerungssignalen derart zu erzeugen, dass der Fokuspunkt 222 des Schallfelds 221 einen vertikalen Abstand von weniger als 2 cm, 1cm, 5mm oder weniger zu der Vorderseite 212 der optischen Struktur 210 aufweist. Alternativ kann die Steuerschaltung eingerichtet sein, die Mehrzahl an Ansteuerungssignalen derart zu erzeugen, dass der Fokuspunkt 222 des Schallfelds 221 einen vertikalen Abstand von mindestens 1 cm, 2 cm, 5 cm, 10 cm oder mehr zu der Vorderseite 212 der optischen Struktur 210 aufweist.

Die Mehrzahl an Schallwandlern 220-1, 220-2, ..., 220-n sind erfindungsgemäß von einem Substrat (nicht gezeigt) bedeckt, d.h. die Mehrzahl an Schallwandlern 220-1, 220-2, ..., 220-n sind zwischen einem Substrat und der optischen Struktur 210 angeordnet.

Bei dem Substrat kann es sich z.B. um eine Schutzschicht handeln. Entsprechend ist die Steuerschaltung erfindungsgemäß eingerichtet, eines oder mehrere der Mehrzahl an Ansteuerungssignalen auch basierend auf zumindest einer akustischen Eigenschaft des Substrats zu erzeugen. Derart kann auch die akustische Verzerrung der durch die Mehrzahl an Schallwandlern 220-1, 220-2, ..., 220-n ausgestrahlten Schallwellen durch zwischen der Mehrzahl an Schallwandlern 220-1, 220-2, ..., 220-n und dem Benutzer befindliche Substrate kompensiert werden.

Zumindest einer der Mehrzahl an Schallwandler 220-1, 220-2, ..., 220-n kann, wie oben in Zusammenhang mit der Mehrzahl an Schallwandler 120-1, 120-2, ..., 120-n der Anzeigevorrichtung 100 beschrieben, ferner ausgebildet sein, basierend auf empfangenen Schallwellen ein Ausgangssignal bereitzustellen.

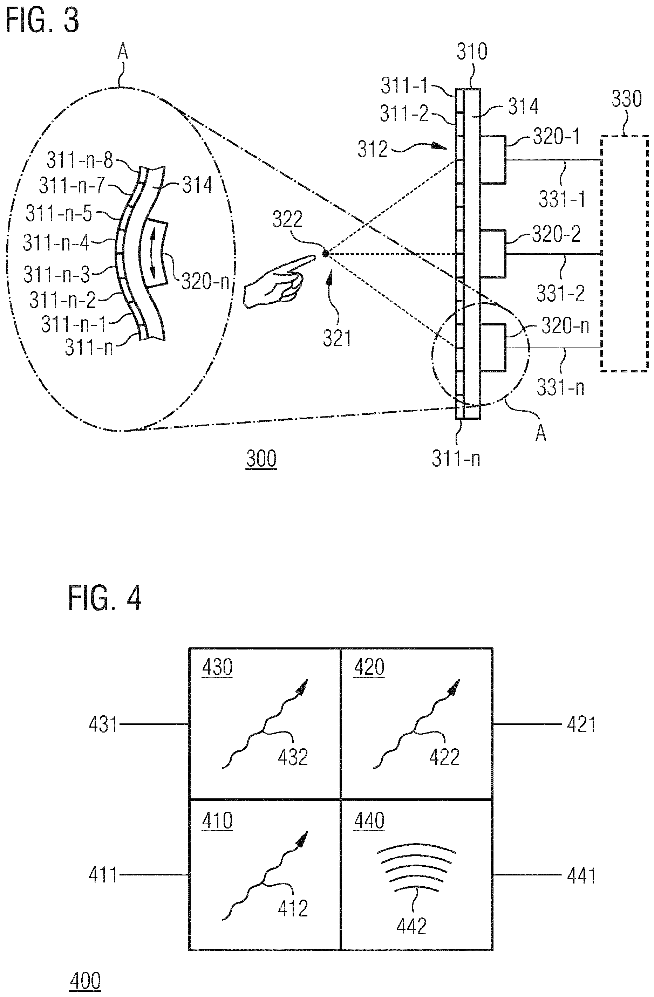

In den beiden Anzeigenvorrichtungen 100, 200 wurden Schallwandler extern an einer optischen Struktur angebracht. In einem nicht beanspruchten Beispiel, kann die optische Struktur selbst jedoch auch als Quelle für das Schallfeld dienen. Dazu ist in **Fig.** 3 die Anzeigevorrichtung 300 gezeigt.

Die Anzeigevorrichtung 300 umfasst eine optische Struktur 310 mit einer Mehrzahl an Pixeln 311-1, 311-2, ..., 311-n, die eingerichtet sind, auf einer Vorderseite 312 der optischen Struktur 310 ein optisches Bild zu erzeugen. Die Mehrzahl an Pixeln 311-1, 311-2, ..., 311-n sind auf einem Trägersubstrat 314 der optischen Struktur 310 angeordnet. Ferner umfasst die Anzeigevorrichtung 300 eine Mehrzahl an elektromechanischen Wandlern 320-1, 320-2, ..., 320-n, die eingerichtet sind, basierend auf einer Mehrzahl an Ansteuerungssignalen 331-1, 331-2, ..., 331-n zumindest das Trägersubstrat 314 derart mechanisch zu verformen, dass sich durch die mechanische Verformung des Trägersubstrats 314 in einem Raum vor der Vorderseite 312 der optischen Struktur 310 ein Schallfeld 321 zur Reizung des Tastsinns einer menschlichen Person ausbildet.

Wie auch die obigen Anzeigevorrichtungen kann die Anzeigevorrichtung 300 neben der Ausgabe eines optischen Bildes über die optische Struktur 310 auch das Bereitstellen einer taktilen Rückmeldung über das durch die mechanische Verformung des Trägersubstrats 314 erzeugte Schallfeld 321 ermöglichen. Dabei sind keine externen Schallwandler nötig, um das Schallfeld zu erzeugen, da die optische Struktur 310 selbst als Schallquelle dient.

Die optische Struktur 310 kann im Wesentlichen identisch zu den obigen optischen Strukturen 110 und 210 aufgebaut sein. Jedoch umfasst die optische Struktur zusätzlich das Trägersubstrat 314.

Die Anregung der optischen Struktur 310 durch die Mehrzahl an elektromechanischen Wandlern 320-1, 320-2, ..., 320-n ist in Fig. 3 exemplarisch am Beispiel des elektromechanischen Wandlers 320-n in dem Ausschnitt A, der einen Teil der Anzeigevorrichtung 300 vergrößert darstellt, gezeigt. Wie in Fig. 3 angedeutet, können die Mehrzahl an elektromechanischen Wandlern 320-1, 320-2, ..., 320-n auf dem Trägersubstrat 314 der optischen Struktur 310, d.h. in einem rückseitigen Bereich der optischen Struktur 310, angeordnet sein.

Der elektromechanische Wandler 320-n ist eingerichtet, elektrische Energie in mechanische Energie zu wandeln. Beispielsweise kann der elektromechanische Wandler 320-n abhängig von einer daran angelegten elektrischen Spannung oder einem daran angelegten elektrischen Strom eine mechanische Bewegung bzw. Verformung durchführen. Dieser Wandlungsvorgang kann z.B. auf dem Piezoeffekt oder einem kapazitiven Effekt basieren. Entsprechend kann der elektromechanische Wandler 320-n in einigen Ausführungsbeispielen ein piezoelektrischer Aktor oder ein kapazitiver Aktor sein.

Beispielsweise kann der elektromechanische Wandler 320-n abhängig von dem Ansteuerungssignal 331-n eine Längenänderung durchführen, wie dies durch den Pfeil in Fig. 3 angedeutet ist. Aufgrund seiner Befestigung an dem Trägersubstrat 314, wird durch die Längenänderung des elektromechanischen Wandlers 320-n ein Teilbereich des Trägersubstrats 314 verformt (z.B. gewölbt wie in Fig. 3 dargestellt). Neben dem Trägersubstrat 314 können auch weitere Elemente der optischen Struktur durch den elektromechanischen Wandler 320-n verformt werden. Dies ist in Fig. 3 durch die Verformung der Pixel 311-n-3, 311-n-2, ..., 311-n angedeutet. Durch eine Verformung zumindest des Trägersubstrats 314 mit einer entsprechenden Frequenz durch den elektromechanischen Wandler 320-n kann die optische Struktur 310 so zur Ausstrahlung von Schallwellen angeregt werden.

Durch die Anregung der optischen Struktur 310 an mehreren Stellen durch die Mehrzahl an elektromechanischen Wandlern 320-1, 320-2, ..., 320-n kann die optische Struktur 310 zur Ausstrahlung einer Mehrzahl an Schallwellen angeregt werden, die sich im Raum vor der Vorderseite 312 der optischen Struktur 310 überlagern und so ein Schallfeld 321 zur Reizung des Tastsinns einer menschlichen Person erzeugen können.

Um die Mehrzahl an Ansteuerungssignalen 331-1, 331-2, ..., 331-n zu erzeugen, kann die Anzeigevorrichtung 300 ferner eine Steuerschaltung 330 umfassen. Beispielsweise kann die Steuerschaltung 330 eingerichtet sein, zumindest eines der Mehrzahl an Ansteuerungssignalen 331-1, 331-2, ..., 331-n basierend auf zumindest einer mechanischen Eigenschaft der optischen Struktur 310 zu erzeugen. Entsprechend kann die Verformung des Trägersubstrats 314 bzw. der optischen Struktur 310 auf die optische Struktur 310 abgestimmt sein, so dass eine Verzerrung des gewünschten Schallfelds durch die optische Struktur 310 vermieden werden kann. Bei der zumindest einen mechanischen Eigenschaft handelt es sich um eine Eigenschaft, welche die Verformbarkeit der optischen Struktur 310 charakterisiert. Beispielsweise kann es sich dabei um ein Torsionsmodul, ein Elastizitätsmodel, eine Querkontraktionszahl, ein Kompressionsmodul, ein Material oder einen Dehnungskoeffizienten der optischen Struktur 310 oder eines Bestandteils davon handeln.

Die Mehrzahl an elektromechanischen Wandlern 320-1, 320-2, ..., 320-n können dabei eingerichtet sein, basierend auf der Mehrzahl an Ansteuerungssignalen 331-1, 331-2, ..., 331-n zumindest das Trägersubstrat derart zu verformen, dass die optische Struktur Schallwellen mit einer Frequenz von zumindest 25 kHz, 40 kHz, 60 kHz, 100 kHz oder mehr in den Raum vor der Vorderseite 312 der optischen Struktur 310 ausstrahlt.

Wie bereits zu den Anzeigevorrichtungen 100 und 200 ausgeführt, kann auch bei der Anzeigevorrichtung 300 das Schallfeld 321 einem Objekt in dem optischen Bild zugeordnet sein. Entsprechend kann die Steuerschaltung 330 daher eingerichtet sein, die Mehrzahl an Ansteuerungssignalen 331-1, 331-2, ..., 331-n basierend auf einem Zustand des Objekts in dem optischen Bild zu erzeugen. Um Wiederholungen zu vermeiden sei daher auf die obigen Ausführungen verwiesen.

Der Fokuspunkt 322 des Schallfelds 321 kann dabei wiederum sowohl nahe an der Vorderseite 312 der optischen Struktur 310 ausgebildet werden, als auch in einiger Entfernung davon. Beispielsweise kann die Steuerschaltung 330 eingerichtet sein, die Mehrzahl an Ansteuerungssignalen 331-1, 331-2, ..., 331-n derart zu erzeugen, dass der Fokuspunkt 322 des Schallfelds 321 einen vertikalen Abstand von weniger als 2 cm, 1cm, 5mm oder weniger zu der Vorderseite 312 der optischen Struktur 310 aufweist. Alternativ kann die Steuerschaltung eingerichtet sein, die Mehrzahl an Ansteuerungssignalen derart zu erzeugen, dass der Fokuspunkt 322 des Schallfelds 321 einen vertikalen Abstand von mindestens 1 cm, 2 cm, 5 cm, 10 cm oder mehr zu der Vorderseite 312 der optischen Struktur 310 aufweist.

Die Steuerschaltung 330 kann eines oder mehrere der Mehrzahl an Ansteuerungssignalen 331-1, 331-2, ..., 331-n zudem auch basierend auf zumindest einer akustischen Eigenschaft eines auf der Vorderseite 312 der optischen Struktur 310 angeordneten Substrats (nicht gezeigt) erzeugen. Derart kann auch die akustische Verzerrung der durch die optische Struktur 310 ausgestrahlten Schallwellen durch zwischen der optischen Struktur 310 und dem Benutzer befindlichen Substraten (z.B. Schutzschicht aus Glas etc.) kompensiert werden. Zumindest einer der Mehrzahl an Schallwandler 320-1, 320-2, ..., 320-n kann, wie oben in Zusammenhang mit der Mehrzahl an Schallwandler 120-1, 120-2, ..., 120-n der Anzeigevorrichtung 100 beschrieben, ferner ausgebildet sein, basierend auf empfangenen Schallwellen ein Ausgangssignal bereitzustellen.

In einem nicht beanspruchten Beispiel kann die Ausstrahlung von Schallwellen aber auch in die optische Struktur integriert werden. Dies ist in Fig. 4 gezeigt, welche ein Pixel 400 für eine Anzeigevorrichtung zeigt. Das Pixel 400 umfasst ein erstes Subpixel 410, das eingerichtet ist, basierend auf einem ersten Ansteuerungssignal 411 rotes Licht 412 auszustrahlen. Zudem umfasst das Pixel 400 ein zweites Subpixel 420, das eingerichtet ist, basierend auf einem zweiten Ansteuerungssignal 421 blaues Licht 422 auszustrahlen. Ferner umfasst das Pixel 400 ein drittes Subpixel 430, das eingerichtet ist, basierend auf einem dritten Ansteuerungssignal 431 grünes Licht 432 auszustrahlen. Das Pixel 400 umfasst außerdem einen Schallwandler 440, der eingerichtet ist, basierend auf einem vierten Ansteuerungssignal 441 Schallwellen auszustrahlen.

Das Pixel 400 kann es ermöglichen, sowohl die Darstellung optischer Informationen über die Abstrahlung von rotem, grünen und blauen Licht 412, 422, 432 als auch die taktiler Informationen über die Ausstrahlung der Schallwellen 442 zu ermöglichen. Durch die Integration des Schwallwandlers 440 in das Pixel 400 kann der Aufbau von Anzeigevorrichtungen mit taktiler Rückmeldung insgesamt vereinfacht werden.

Die Subpixel 410, 420, 430 können jeweils eine Leuchtdiode umfassen, die rotes, blaues bzw. grünes Licht emittiert. Alternativ, können die Subpixel 410, 420, 430 auch jeweils eine Leuchtdiode umfassen, die blaues Licht emittiert, wobei die Subpixel 410 und 430 dann zusätzlich ein Konversionselement umfassen, um das blaue Licht der Leuchtdiode in rotes bzw. grünes Licht zu wandeln. Die Leuchtdioden können beispielsweise organische und/oder anorganische halbleitende Materialien umfassen. Mittels additiver Farbmischung des roten, grünen und blauen Lichts 412, 422, 432 kann das Pixel 400 eine Vielzahl an Farbwerten (d.h. Mischfarben) darstellen.

Bei dem Schallwandler 440 kann es sich in einigen Ausführungsbeispielen wiederum um einen MEMS-Schallwandler handeln. Der Schallwandler 440 kann dabei ausgebildet sein, Schallwellen mit einer Frequenz von zumindest 25 kHz, 40 kHz, 60 kHz, 100 kHz oder mehr auszustrahlen.

Der Schallwandler 440 kann, wie oben in Zusammenhang mit der Mehrzahl an Schallwandler 120-1, 120-2, ..., 120-n der Anzeigevorrichtung 100 beschrieben, ferner ausgebildet sein, basierend auf empfangenen Schallwellen ein Ausgangssignal bereitzustellen.

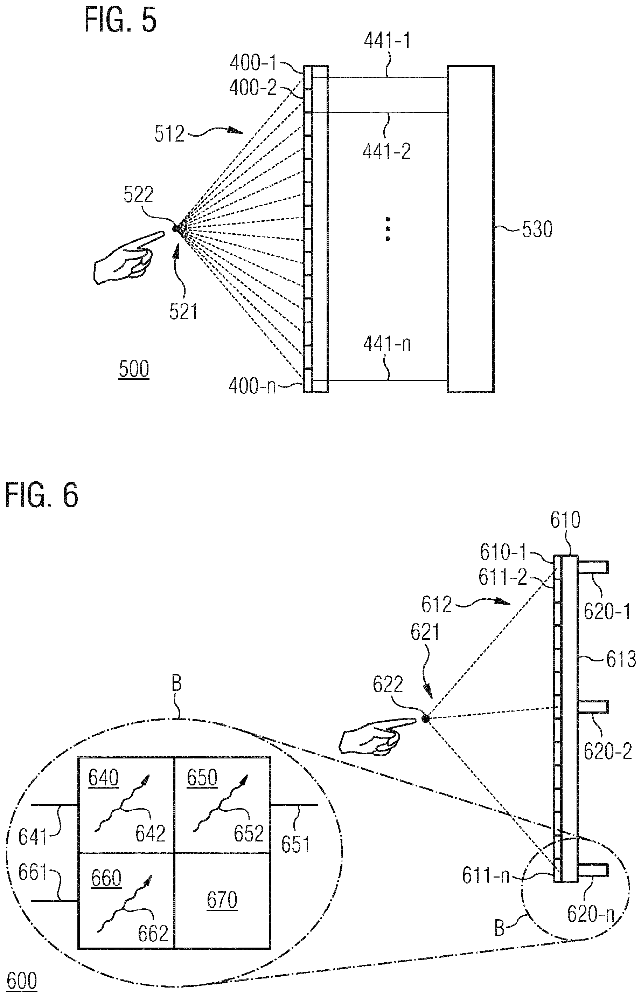

Eine Implementierung des Pixels 400 in eine Anzeigevorrichtung 500 ist in Fig. 5 gezeigt. Die Anzeigevorrichtung 500 umfasst eine Mehrzahl der in Zusammenhang mit Fig. 4 beschriebenen Pixel 400-1, 400-2, ..., 400-n. Die Mehrzahl an Pixeln 400-1, 400-2, ..., 400-n sind eingerichtet, auf einer Vorderseite 512 der Anzeigevorrichtung 500 ein optisches Bild zu erzeugen. Die Anzeigevorrichtung 500 umfasst weiterhin eine Steuerschaltung 530, die eingerichtet ist, für die Mehrzahl an Pixeln 400-1, 400-2, ..., 400-n eine Mehrzahl an vierten Ansteuerungssignalen 441-1, 441-2, ..., 441-n zu erzeugen, so dass die Schallwandler der Mehrzahl an Pixeln 400-1, 400-2, ..., 400-n in einem Raum vor der Vorderseite 512 der Anzeigevorrichtung 500 ein Schallfeld 521 zur Reizung des Tastsinns einer menschlichen Person erzeugen.

Die Anzeigevorrichtung 500 kann neben der Ausgabe eines optischen Bildes auch das Bereitstellen einer taktilen Rückmeldung über das durch die Schallwandler der Mehrzahl an Pixeln 400-1, 400-2, ..., 400-n erzeugte Schallfeld 521 ermöglichen.

Wie bereits oben zu den Anzeigenvorrichtungen 100, 200 und 300 ausgeführt, kann das Schallfeld 521 bzw. ein Fokuspunkt 522 des Schallfelds 521 einem Objekt in dem optischen Bild zugeordnet sein. Die Steuerschaltung 530 kann daher wiederum eingerichtet sein, die Mehrzahl an vierten Ansteuerungssignalen 441-1, 441-2, ..., 441-n basierend auf einem Zustand des Objekts in dem optischen Bild zu erzeugen.

Die Mehrzahl an Pixeln 400-1, 400-2, ..., 400-n können in einigen Ausführungsbeispielen durch ein Substrat (nicht gezeigt) bedeckt sein. Mit anderen Worten: Die Mehrzahl an Pixeln 400-1, 400-2, ..., 400-n können in einigen Ausführungsbeispielen die Schallwellen durch ein Substrat hindurch in den Raum vor der Vorderseite der Anzeigevorrichtung 500 ausstrahlen. Bei dem Substrat kann es sich z.B. um eine Schutzschicht handeln. Entsprechend kann die Steuerschaltung 530 eines oder mehrere der Mehrzahl an vierten Ansteuerungssignalen 441-1, 441-2, ..., 441-n auch basierend auf zumindest einer akustischen Eigenschaft des Substrats erzeugen. Derart kann auch die akustische Verzerrung der durch die Mehrzahl an Pixeln 400-1, 400-2, ..., 400-n ausgestrahlten Schallwellen durch zwischen der Mehrzahl an Pixeln 400-1, 400-2, ..., 400-n und dem Benutzer befindliche Substrate kompensiert werden.

Der Fokuspunkt 522 des Schallfelds 521 kann dabei wiederum sowohl nahe an der Vorderseite 512 der Anzeigevorrichtung 500 ausgebildet werden, als auch in einiger Entfernung davon. Beispielsweise kann die Steuerschaltung 530 eingerichtet sein, die Mehrzahl an vierten Ansteuerungssignalen 441-1, 441-2, ..., 441-n derart zu erzeugen, dass der Fokuspunkt 522 des Schallfelds 521 einen vertikalen Abstand von weniger als 2 cm, 1cm, 5mm oder weniger zu der Vorderseite 512 der Anzeigevorrichtung 500 aufweist. Alternativ kann die Steuerschaltung eingerichtet sein, die Mehrzahl an Ansteuerungssignalen derart zu erzeugen, dass der Fokuspunkt 522 des Schallfelds 521 einen vertikalen Abstand von mindestens 1 cm, 2 cm, 5 cm, 10 cm oder mehr zu der Vorderseite 512 der Anzeigevorrichtung 500 aufweist.

Abschließend ist in **Fig.** 6 noch eine weitere nicht beanspruchte Anzeigevorrichtung 600 gezeigt. Die Anzeigevorrichtung umfasst eine optische Struktur 610 mit einer Mehrzahl an Pixeln 611-1, 611-2, ..., 611-n, die eingerichtet sind, auf einer Vorderseite 612 der optischen Struktur 610 ein optisches Bild zu erzeugen. Zumindest eines der Mehrzahl an Pixeln 611-1, 611-2, ..., 611-n (beispielsweise Pixel 611-n) umfasst ein erstes Subpixel 640, das eingerichtet ist, basierend auf einem ersten Ansteuerungssignal 641 rotes Licht 642 auszustrahlen. Das Pixel umfasst ferner ein zweites Subpixel 650, das eingerichtet ist, basierend auf einem zweiten Ansteuerungssignal 651 blaues Licht 652 auszustrahlen. Zudem umfasst das Pixel ein drittes Subpixel 660, das eingerichtet ist, basierend auf einem dritten Ansteuerungssignal 661 grünes Licht auszustrahlen 662, und einen akustisch transparenten Bereich 670. Die Anzeigevorrichtung 600 umfasst ferner eine Mehrzahl an Schallwandlern 620-1, 620-2, ..., 620-n, die eingerichtet sind, in einem Raum vor der Vorderseite 612 der optischen Struktur 610 ein Schallfeld 621 zur Reizung des Tastsinns einer menschlichen Person zu erzeugen. Einer der Mehrzahl an Schallwandlern 620-1, 620-2, ..., 620-n (beispielsweise Schallwandler 620-n) ist derart auf einer Rückseite 613 der optischen Struktur 610 angeordnet, dass ein Bereich des Schallwandlers, in dem dieser Schallwellen ausstrahlt, zumindest teilweise den akustisch transparenten Bereich 670 des Pixels überdeckt.

Wie auch die obigen Anzeigevorrichtungen kann die Anzeigevorrichtung 600 neben der Ausgabe eines optischen Bildes über die optische Struktur 610 auch das Bereitstellen einer taktilen Rückmeldung über das von der Mehrzahl an Schallwandlern 620-1, 620-2, ..., 620-n erzeugte Schallfeld 621 ermöglichen. Ein Verzerrung der von dem einen Schallwandler der Mehrzahl an Schallwandlern 620-1, 620-2, ..., 620-n ausgestrahlten Schallwellen durch die optische Struktur 610 kann durch die mit dem akustisch transparenten Bereich 670 des Pixels fluchtende Positionierung des Schallwandlers auf der Rückseite 613 der optischen Struktur vermieden werden. Entsprechend müssen Schallverzerrungen durch die optische Struktur 610 bei der Ansteuerung des Schallwandlers nicht bzw. kaum berücksichtigt werden.

Auch die weiteren Schallwandler der Mehrzahl an Schallwandlern 620-1, 620-2, ..., 620-n können jeweils derart auf einer Rückseite 613 der optischen Struktur 610 angeordnet sein, dass ein jeweiliger Bereich der Schallwandler, in dem diese Schallwellen ausstrahlen, zumindest teilweise einen akustisch transparenten Bereich 670 eines der Mehrzahl an Pixeln 611-1, 611-2, ..., 611-n zumindest teilweise überdeckt. Entsprechend kann eine Verzerrung der von der Mehrzahl an Schallwandlern 620-1, 620-2, ..., 620-n ausgestrahlten Schallwellen durch die optische Struktur 610 vermieden werden.

Der akustisch transparente Bereich 670 des Pixels ist ein Bereich des Pixels, der von einer Schallwelle ohne bzw. ohne wesentliche Verzerrungen durchdrungen werden kann. Beispielseise kann der akustisch transparente Bereich 670 eine Aussparung (z.B. ein Loch) sein. Umfasst die optische Struktur 610 noch weitere Elemente wie etwa ein Trägersubstrat, so können auch Bereiche dieser, die den akustisch transparenten Bereich 670 des Pixels überdecken, selbst akustisch transparent sein. Ansonsten kann die optische Struktur 610 im Wesentlichen wie die oben beschriebene optische Struktur 110 aufgebaut sein.

Einer oder mehrere der Mehrzahl an Schallwandlern 620-1, 620-2, ..., 620-n können wiederum als MEMS-Schallwandler ausgebildet sein. Ebenso können die Mehrzahl an Schallwandlern 620-1, 620-2, ..., 620-n eingerichtet sein, Schallwellen mit einer Frequenz von zumindest 25 kHz, 40 kHz, 60 kHz, 100 kHz oder mehr auszustrahlen.

Wie bereits zu den obigen Anzeigevorrichtungen ausgeführt, kann das Schallfeld 621 einem Objekt in dem auf der Vorderseite 612 der optischen Struktur 610 erzeugten optischen Bild zugeordnet sein. Entsprechend kann die Anzeigevorrichtung 600 eine Steuerschaltung (nicht gezeigt) aufweisen, die eingerichtet ist, eine Mehrzahl an Ansteuerungssignalen für die Mehrzahl an Schallwandlern 620-1, 620-2, ..., 620-n basierend auf einem Zustand des Objekts in dem optischen Bild zu erzeugen. Derart kann das Schallfeld 621 an den Zustand des Objekts in dem optischen Bild angepasst werden.

Der Fokuspunkt 622 des Schallfelds 621 kann dabei wiederum sowohl nahe an der Vorderseite 612 der optischen Struktur 610 ausgebildet werden, als auch in einiger Entfernung davon. Beispielsweise kann die Steuerschaltung der Anzeigevorrichtung 600 eingerichtet sein, die Mehrzahl an Ansteuerungssignalen derart zu erzeugen, dass der Fokuspunkt 622 des Schallfelds 621 einen vertikalen Abstand von weniger als 2 cm, 1cm, 5mm oder weniger zu der Vorderseite 612 der optischen Struktur 610 aufweist. Alternativ kann die Steuerschaltung eingerichtet sein, die Mehrzahl an Ansteuerungssignalen derart zu erzeugen, dass der Fokuspunkt 622 des Schallfelds 621 einen vertikalen Abstand von mindestens 1 cm, 2 cm, 5 cm, 10 cm oder mehr zu der Vorderseite 612 der optischen Struktur 610 aufweist.

Die Steuerschaltung der Anzeigevorrichtung 600 kann eines oder mehrere der Mehrzahl an Ansteuerungssignalen zudem auch basierend auf zumindest einer akustischen Eigenschaft eines auf der Vorderseite 612 der optischen Struktur 610 angeordneten Substrats (nicht gezeigt) erzeugen. Derart kann auch die akustische Verzerrung der durch die Mehrzahl an Schallwandlern 620-1, 620-2, ..., 620-n ausgestrahlten Schallwellen durch zwischen der optischen Struktur 610 und dem Benutzer befindlichen Substraten (z.B. Schutzschicht aus Glas etc.) kompensiert werden.

Zumindest einer der Mehrzahl an Schallwandler 620-1, 620-2, ..., 620-n kann, wie oben in Zusammenhang mit der Mehrzahl an Schallwandler 120-1, 120-2, ..., 120-n der Anzeigevorrichtung 100 beschrieben, ferner ausgebildet sein, basierend auf empfangenen Schallwellen ein Ausgangssignal bereitzustellen.

Ausführungsbeispiele der vorliegenden Offenbarung betreffen somit unter anderem eine gestapelte oder integrierte Anordnung aus optischen und akustischen Elementen. Dabei können beide Elemente in ihren Eigenschaften aufeinander angepasst und abgestimmt sein. Mit dieser Anordnung kann ein örtlich und zeitlich variables Druckfeld vor einem aktiven optischen Display erzeugt werden.

Gemäß einem nicht beanspruchten Beispiel kann eine zwei-dimensionale Anordnung von Ultraschallwandlern hinter einem aktiven optischen Display positioniert werden. Dabei kann eine Korrektur der Ansteuerung der einzelnen Ultraschallwandler zur Unterdrückung der Verzerrung im akustischen Feld durch die akustischen Eigenschaften des optischen Displays erfolgen. Ebenso können die einzelnen Ultraschallwandler an die akustischen Eigenschaften des optischen Displays angepasst werden, insbesondere können die optischen Displays als akustische Anpassschicht für die dahinter befindlichen Ultraschallwandler dienen. Beispielsweise können die Ultraschallwandler als Array aufgebaut sein. Ebenso kann das Ultraschallarray durch Methoden der Mikrosystemtechnik aufgebaut sein.

Erfindungsgemäß kann eine zwei-dimensionale Anordnung von Ultraschallwandlern vor einem aktiven optischen Display positioniert werden. Dabei sind die Ultraschallwandler aus optisch transparentem Material aufgebaut.

Ebenso kann in einem nicht beanspruchten Beispiel ein aktives optisches Display als Schallquelle genutzt werden. Beispielsweise kann die Schallquelle über seitlich akustisch isolierte Ultraschallwandler hinter dem optischen Display strukturiert werden.

Derart kann ein zeitlich und örtlich variables Druckfeld vor dem optischen Display für eine taktile Rückmeldung genutzt werden. Optische und akustische Systeme können dabei optimal aufeinander abgestimmte Einheiten bilden. Durch den flachen Aufbau kann zudem erreicht werden, dass eine Dicke des Displays nur minimal vergrößert wird. Weiterhin kann kein Platz seitlichen neben dem optischen Display für Ultraschallwandler nötig sein.

Die vorgeschlagenen Anzeigevorrichtungen können beispielsweise für mobile Endgeräte (z.B. Smartphone, Laptop-Computer oder Tablet-Computer), die Ausgabe von Computergrafik (z.B. für Computerspiele) oder auch für die Steuerung von Maschinen und kooperative Robotik verwendet werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Anzeigevorrichtung (200), umfassend:
eine optische Struktur (210) mit einer Mehrzahl an Pixeln (211-1, 211-2, ..., 211-n), die eingerichtet sind, auf einer Vorderseite (212) der optischen Struktur (210) ein optisches Bild zu erzeugen;
eine Mehrzahl an MEMS-Schallwandlern (220-1, 220-2, ..., 220-n), die eingerichtet sind, in einem Raum vor der Vorderseite (212) der optischen Struktur (210) ein Schallfeld (221) zur Reizung des Tastsinns einer menschlichen Person zu erzeugen,
wobei die Mehrzahl an MEMS-Schallwandlern (220-1, 220-2, ..., 220-n) auf der Vorderseite (212) der optischen Struktur (210) angeordnet sind,
wobei die Mehrzahl an MEMS-Schallwandlern (220-1, 220-2, ..., 220-n) für Licht mit einer Wellenlänge im Bereich von 380 nm bis 750 nm optisch transparent sind,
wobei die Mehrzahl an MEMS-Schallwandlern (220-1, 220-2, ..., 220-n) zwischen einem Substrat und der optischen Struktur (210) angeordnet sind, und
wobei die Anzeigevorrichtung ferner eine Steuerschaltung umfasst, die eingerichtet ist, zumindest eines einer Mehrzahl an Ansteuerungssignalen für die Mehrzahl an MEMS-Schallwandlern (220-1, 220-2, ..., 220-n) basierend auf zumindest einer akustischen Eigenschaft des Substrats zu erzeugen.

2. Anzeigevorrichtung nach Anspruch 1, wobei zumindest einer der Mehrzahl an MEMS-Schallwandlern (220-1, 220-2, ..., 220-n) eingerichtet ist, Schallwellen mit einer Frequenz von zumindest 25 kHz auszustrahlen.

3. Anzeigevorrichtung nach Anspruch 1 oder Anspruch 2, wobei das Schallfeld (221) einem Objekt in dem optischen Bild zugeordnet ist.

4. Anzeigevorrichtung nach Anspruch 3, wobei die Steuerschaltung eingerichtet ist, die Mehrzahl an Ansteuerungssignalen für die Mehrzahl an MEMS-Schallwandlern (220-1, 220-2, ..., 220-n) basierend auf einem Zustand des Objekts in dem optischen Bild zu erzeugen.

5. Anzeigevorrichtung nach Anspruch 4, wobei die Steuerschaltung eingerichtet ist, die Mehrzahl an Ansteuerungssignalen derart zu erzeugen, dass ein Fokuspunkt (222) des Schallfelds (221) einen vertikalen Abstand von mindestens 2 cm zu der Vorderseite der optischen Struktur (210) aufweist.

6. Anzeigevorrichtung nach einem der vorhergehenden Ansprüche, wobei zumindest einer der Mehrzahl an MEMS-Schallwandlern (220-1, 220-2, ..., 220-n) ferner ausgebildet ist, basierend auf empfangenen Schallwellen ein Ausgangssignal bereitzustellen.

7. Anzeigevorrichtung nach einem der vorhergehenden Ansprüche, wobei das Substrat eine Schutzschicht ist.

## Claims

1. A display device (200) comprising:
an optical structure (210) having a plurality of pixels (211-1, 211-2, ..., 211-n) configured to form an optical image on a front side (212) of the optical structure (210);
a plurality of MEMS sound transducers (220-1, 220-2, ..., 220-n) configured to form a sound field (221) in a space in front of the front side (212) of the optical structure (210) for stimulating the tactile sense of a human person,
wherein the plurality of MEMS sound transducers (220-1, 220-2, ..., 220-n) are disposed on the front side (212) of the optical structure (210),
wherein the plurality of MEMS sound transducers (220-1, 220-2, ..., 220-n) are optically transparent to light having a wavelength in the range of 380 nm to 750 nm,
wherein the plurality of MEMS sound transducers (220-1, 220-2, ..., 220-n) are disposed between a substrate and the optical structure (210), and
wherein the display device further comprises a control circuit configured to generate at least one of a plurality of drive signals for the plurality of MEMS sound transducers (220-1, 220-2, ..., 220-n) based on at least one acoustic property of the substrate.

2. The display device of claim 1, wherein at least one of the plurality of MEMS sound transducers (220-1, 220-2, ..., 220-n) is configured to radiate sound waves having a frequency of at least 25 kHz.

3. The display device of claim 1 or claim 2, wherein the sound field (221) is associated to an object in the optical image.

4. The display device of claim 3, wherein the control circuit is configured to generate the plurality of drive signals for the plurality of MEMS sound transducers (220-1, 220-2, ..., 220-n) based on a state of the object in the optical image.

5. The display device of claim 4, wherein the control circuit is configured to generate the plurality of drive signals such that a focal point (222) of the sound field (221) has a vertical distance of at least 2 cm to the front side of the optical structure (210).

6. The display device of any of the preceding claims, wherein at least one of the plurality of MEMS sound transducers (220-1, 220-2, ..., 220-n) is further configured to provide an output signal based on received sound waves.

7. The display device of any of the preceding claims, wherein the substrate is a protective layer.

## Revendications

1. Dispositif d'affichage (200), comprenant :
une structure optique (210) avec une pluralité de pixels (211-1, 211-2, ..., 211-n), qui sont configurés pour générer une image optique sur une face avant (212) de la structure optique (210) ;
une pluralité de transducteurs acoustiques MEMS (220-1, 220-2, ..., 220-n) qui sont configurés pour générer, dans un espace avant la face avant (212) de la structure optique (210), un champ acoustique (221) pour stimuler le sens du toucher d'une personne humaine,
dans lequel la pluralité de transducteurs acoustiques MEMS (220-1, 220-2, ..., 220-n) sont disposés sur la face avant (212) de la structure optique (210),
dans lequel la pluralité de transducteurs acoustiques MEMS (220-1, 220-2, ..., 220-n) sont optiquement transparents pour une lumière ayant une longueur d'onde dans la plage de 380 nm à 750 nm,
dans lequel la pluralité de transducteurs acoustiques MEMS (220-1, 220-2, ..., 220-n) sont disposés entre un substrat et la structure optique (210), et
dans lequel le dispositif d'affichage comprend en outre un circuit de commande qui est configuré pour générer au moins l'un parmi une pluralité de signaux de commande pour la pluralité de transducteurs acoustiques MEMS (220-1, 220-2, ..., 220-n) sur la base d'au moins une propriété acoustique du substrat.

2. Dispositif d'affichage selon la revendication 1, dans lequel au moins l'un parmi la pluralité de transducteurs acoustiques MEMS (220-1, 220-2, ..., 220-n) est configuré pour émettre des ondes sonores ayant une fréquence d'au moins 25 kHz.

3. Dispositif d'affichage selon la revendication 1 ou la revendication 2, dans lequel le champ acoustique (221) est associé à un objet dans l'image optique.

4. Dispositif d'affichage selon la revendication 3, dans lequel le circuit de commande est configuré pour générer la pluralité de signaux de commande pour la pluralité de transducteurs acoustiques MEMS (220-1, 220-2, ..., 220-n) sur la base d'un état de l'objet dans l'image optique.

5. Dispositif d'affichage selon la revendication 4, dans lequel le circuit de commande est configuré pour générer la pluralité de signaux de commande de sorte qu'un point focal (222) du champ acoustique (221) présente une distance verticale d'au moins 2 cm par rapport à la face avant de la structure optique (210).

6. Dispositif d'affichage selon l'une des revendications précédentes, dans lequel au moins l'un parmi la pluralité de transducteurs acoustiques MEMS (220-1, 220-2, ..., 220-n) est en outre configuré pour fournir un signal de sortie sur la base des ondes acoustiques reçues.

7. Dispositif d'affichage selon l'une des revendications précédentes, dans lequel le substrat est une couche de protection.
